# EUROPÄISCHE PATENTSCHRIFT

(11) **EP 4 258 864 B1**
(45) Veröffentlichungstag und Bekanntmachung des Hinweises auf die Patenterteilung: **20.08.2025**
(21) Anmeldenummer: 21831211.4
(22) Anmeldetag: 08.12.2021
(51) Int. Cl.: A01K 61/59, A01K 61/90, B07C 5/06

(54) **VORRICHTUNG ZUR FREIWILLIGEN SELBSTSORTIERUNG VON LEBENDEN WASSERTIEREN UND ANWENDUNGEN DAVON**
APPARATUS FOR VOLUNTARY SELF-ORIENTATION OF LIVING AQUATIC ANIMALS AND APPLICATIONS THEREOF
APPAREIL D'AUTO-TRIAGE VOLONTAIRE D'ANIMAUX AQUATIQUES VIVANTS ET APPLICATIONS ASSOCIÉES.

(30) Priorität: 11.12.2020 DE 102020133105
(43) Veröffentlichungstag der Anmeldung: 18.10.2023
(73) Patentinhaber: Alfred-Wegener-Institut Helmholtz-Zentrum für Polar- und Meeresforschung, 27570 Bremerhaven (DE)
(72) Erfinder: BÖGNER, Mirko, 27578 Bremerhaven (DE); KARAMYAR, Amirhossein, 27568 Bremerhaven (DE)
(86) Internationale Anmeldenummer: PCT/DE2021/100984
(87) Internationale Veröffentlichungsnummer: WO 2022/122084

(56) Entgegenhaltungen:
- CN-A- 110 946 106
- DE-B4- 102010 021 606
- KR-B1- 100 905 175
- US-A1- 2015 250 149

## Beschreibung

Die Erfindung bezieht sich auf eine Vorrichtung zur freiwilligen Selbstsortierung von lebenden Wassertieren mit zumindest einer Passiereinrichtung, durch die ein Wassertank in einen durchgangsfördernden Bereich und einen durchgangshemmenden Bereich unterteilt ist und die mehrere, in ihrer Größe an die zu sortierenden Wassertiere anpassbare Durchgangsöffnungen aufweist, wobei an der Passiereinrichtung zum durchgangsfördernden Bereich hin Leitelemente und zum durchgangshemmenden Bereich hin Rückhalteelemente angeordnet sind, und auf Anwendungen der Sortiervorrichtung.

Zu denen Wassertieren sind neben den Fischen insbesondere die Krebstiere (*Crustacea*) oder Krebse zu zählen. Diese bilden mit weltweit mindestens 52.000 rezent bekannten Arten einen Unterstamm mit großer Formenvielfalt innerhalb der Gliederfüßer (*Arthropoda*). Im Küchenbereich verwendete Krebstiere werden auch als Krustentiere bezeichnet und stellen ein wertvolles, da eiweißreiches Lebensmittel dar. Zu den größeren Krebstieren zählen vor allem Hummer und Hummerartige, Langusten, Flusskrebse und Garnelen. Als Garnelen (Süß- und Salzwasser) werden unterschiedliche Arten in der Bodenzone lebender oder freischwimmender Krebstiere bezeichnet. Garnelen (auch Shrimps, Prawns, Gambas, Scampis, Crevetten, Granat, Krabben, Porren oder Knat genannt) aus unterschiedlichen Verwandtschaftsgruppen werden als Delikatessen sehr geschätzt. Sie werden kommerziell befischt oder in land- oder wassergestützten Aquakulturen vermehrt.

### Stand der Technik

Ein wesentliches Problem bei der Produktion von beispielsweise Salzwassergarnelen ist das ungleichmäßige Wachstum der Tiere, was zur Erhöhung von Kannibalismus, zur ungezielten Fütterung und einer ungleichen Produktgröße führt. Durch Sortieren der Tiere können diese Effekte unterbunden werden. Jedoch sind die bisherigen Sortiermethoden sehr invasiv und verursachen hohe Stresslevel bei den Garnelen, welche sehr sensibel auf physikalische Störungen reagieren. Die Tiere sterben oder verletzen sich sehr häufig, sie können sogar aus dem Wassertank springen. Diese Nachteile sind oft so schwerwiegend, dass keine Sortierung im Wasserkörper vorgenommen wird. Für die Sortierung lebender Garnelen werden die Tiere derzeit zusammengetrieben, oft aus dem Wasser genommen und an der Luft sortiert. Hierfür werden entweder einfache Kisten mit definierter Schlitzgröße oder Rollensortiersysteme eingesetzt. Die Garnelen werden aus dem Haltungstank genommen und durch diese Kiste gesiebt. Alle Tiere, die zu klein sind, fallen durch die Gitter. Für die Rollensortiersysteme werden die Tiere aus dem Wasser entnommen und über Rollen sortiert. Der Abstand zwischen den Rollen nimmt immer weiter zu, wodurch kleinere Garnelen zuerst, größere erst später durchfallen. Der Sortiervorgang heutzutage, unabhängig von der genutzten Methode, ist sehr arbeitsintensiv und benötigt personelle Ressourcen. Hinzu kommen Investitionskosten für technische Hilfsmittel um die Tiere zusammenzudrängen sowie für das Sortiersystem selbst. Zudem besteht ein hohes Verletzungsrisiko für die Tiere.

Der der Erfindung (erste Ausführungsalternative) nächstliegende Stand der Technik ist aus der US 4 095 092 A bekannt. Dort wird die gattungsgemäße Vorrichtung zum Zählen und Sortieren von lebenden aquatischen Tieren, genannt werden explizit Fische, offenbart. Eine auch vertikal anordenbare Passiereinrichtung unterteilt einen Wassertank in zwei Bereiche. Da die bekannte Vorrichtung vornehmlich zum Zählen der Fische eingesetzt wird, ist davon auszugehen, dass die aus dem einen Bereich in den anderen Bereich einmal hindurchgeschwommenen Fische nicht mehr zurückschwimmen sollen. Daher kann der eine Bereich als durchgangsfördernd (von hier sollen die Fische freiwillig die Passiereinrichtung durchschwimmen) und der andere als durchgangshemmend (von hier sollen die Fische nicht durch die Passiereinrichtung schwimmen) bezeichnet werden. Die Passiereinrichtung umfasst eine Trägerplatte mit kreisrunden Durchgangsöffnungen. Über den Durchmesser der Durchgangsöffnungen sind biegsame, schmale Kontaktfedern gelegt, die Teil eines Schalters ist. Beim Hindurchschwimmen wird die Kontaktfeder vom Fisch aufgebogen und durch das Öffnen des Schalters ein Signal generiert. Danach federt die Kontaktfeder wieder in ihre Ausgangsposition zurück und schließt den Schalter. Ein Auslenken der Kontaktfeder in die andere Richtung ist nicht möglich, sodass die Fische am Zurückschwimmen gehindert werden. Dabei können kleinere Fische aber seitlich an der Kontaktfeder vorbeischwimmen. Auf der Passiereinrichtung zum durchgangsfördernden Bereich hin befinden sich kegelstumpfförmige Leitelemente, die die Fische zu den Durchgangsöffnungen leiten sollen. Vor den Leitelementen ist ein Stabgitter angeordnet, dass der größenbezogenen Vorsortierung der Fische dient. Die kegelstumpfförmigen Leitelemente sollen in Bezug auf das Stabgitter auch verhindern, dass sich die Fische dahinter verfangen. Durch verschiebbare Querriegel, die sekantenartig über die Durchgangsöffnungen geschoben werden können, kann der effektive Durchmesser der Durchgangsöffnungen variiert werden.

Aus der US 2 690 158 A ist es für eine Passiereinrichtung bekannt, die Durchgangsöffnungen trichterförmig auszubilden, sodass diese sich von einem durchgangsfördernden Bereich (größerer Durchmesser) zu einem durchgangshemmenden Bereich (kleinerer Durchmesser) erstrecken. Aus der US 2015/0250149 A1 ist für eine ähnliche Passiereinrichtung es bekannt, auf der Seite der Durchgangsöffnungen zum durchgangshemmenden Bereich hin Rückschlagklappen oder Trichter anzuordnen.

Das Vorsehen von Steighilfen für Krebstiere ist aus der DE 10 2010 021 606 B4 bekannt. Hier werden unterschiedlich gestaltbare Bleche in verschiedenen Ausrichtungen am Unterwasserbereich einer Windturbine angeordnet. Dadurch soll deren Fundament als Habitat von Krebstieren angenommen werden. Aus der DE 10 2018 130 232 B3 ist es für eine Vorrichtung zur freiwilligen Selbstsortierung von lebenden Fischen bekannt, zwei Platten mit schlitzförmigen Öffnungen gegeneinander verschiebbar anzuordnen. Durch Verschieben der einen Platte auf der anderen können die Durchgangsöffnungen in ihrer Größe verändert werden.

Aus der CN 110 946 106 A (nächstliegender Stand der Technik zweite Ausführungsalternative) ist eine Vorrichtung zur freiwilligen Selbstsortierung von lebenden Wassertieren bekannt, bei der die Leitelemente als Leitwinkel aus je zwei ebenen Prallplatten ausgebildet sind, die gelenkig an einer Verbindungswelle angeschlagen sind und zueinander einen veränderlichen Innenwinkel und einen entsprechend veränderlichen Außenwinkel ausbilden. Dabei zeigt der Außenwinkel zum durchgangsfördernden Bereich. Der Innenwinkel zeigt zum durchgangshemmenden Bereich und bildet ein Rückhalteelement. Jeweils zwischen zwei nebeneinander angeordneten Leitwinkeln wird eine spaltförmige Durchgangsöffnung ausgebildet. Die gelenkig angeordneten Prallplatten in einem Leitwinkel können über eine gelenkige Schubstange in ihrem Innen- bzw. Außenwinkel zueinander verändert werden, wodurch die Spaltbreite der Durchgangsöffnungen zwischen zwei benachbarten Leitwinkeln verändert werden kann.

Aus der WO 2014/198556 A1 ist ein Sortiervorrichtung für Fische bekannt, bei der ein netzartiger Schieber gegen eine Trennwand mit unidirektional wirkenden Durchgangsöffnungen rotiert. Dadurch werden die Fische gegen die Durchgangsöffnungen getrieben. Kleinere Fisch können durch die Durchgangsöffnungen hindurchschwimmen, größere Fische werden in dem immer kleiner werden Raum zwischen dem Schieber und der Trennwand festgehalten und müssen hier entnommen werden. Offensichtlich ist der netzartige Schieber so ausgeprägt, dass die kleineren Fisch nicht wieder in den Raum mit den größeren Fischen zurückschwimmen können. Abgesehen davon, dass es sich um eine erzwungene, und nicht um eine freiwillige und stressfreie Selbstsortierung handelt, wird über die Ausprägung der Durchgangsöffnungen in der Trennwand keine Aussage gemacht.

### Aufgabenstellung

Ausgehend von dem zuvor erläuterten, nächstliegenden Stand der Technik ist die **Aufgabe** für die vorliegende Erfindung darin zu sehen, die eingangs beschriebene gattungsgemäße Vorrichtung zur freiwilligen Selbstsortierung von lebenden Wassertieren so weiterzubilden, dass unter Beibehaltung der bereits erreichten Vorteile auch andere lebende Wassertiere, insbesondere Krebstiere, die Vorrichtung völlig freiwillig und weitgehend stressfrei nutzen, wobei die Sortierfunktion der Vorrichtung besonders gut umgesetzt werden soll. Zwei alternative **Lösungen** für diese Aufgabe sind den beiden Vorrichtungsansprüchen zu entnehmen. Vorteilhafte Weiterbildungen der Erfindung werden jeweils in den Unteransprüchen aufgezeigt und im Folgenden im Zusammenhang mit der Erfindung näher erläutert. Bevorzugte Anwendungen der Erfindung in beiden Ausführungsvarianten werden aufgezeigt.

Erfindungsgemäß ist in einer ersten Ausführungsalternative vorgesehen, dass die Leitelemente auch als Steighilfen und die Rückhalteelemente als umlaufende Wandungen ausgebildet sind, die der Kontur der Durchgangsöffnungen angepasst sind und eine Höhe aufweisen, die größer ist als die Höhe der zu sortierenden Wassertiere, und wobei die Durchgangsöffnungen flächig ausgebildet und in einer Trägerplatte angeordnet sind. Dabei ist die Passiereinrichtung bevorzugt und vorteilhaft vertikal angeordnet. Aber auch schräge Anordnungen der Passiereinrichtung sind ohne Weiteres umsetzbar, solange die unumgängliche, trennende Aufteilung zwischen dem durchgangsfördernden und dem durchgangshemmenden Bereich im Wassertank erhalten bleibt.

Im Gegensatz zu Fischen, die ausschließlich im Wasser schwimmen, verbringen Krebstiere einen Teil ihrer Zeit auch substratgebunden, d.h. sie schwimmen gerne in der Nähe von Substraten oder laufen auf diesen herum. Bei der vorgeschlagenen Erfindung werden die Leitelemente so ausgebildet angeordnet, dass die Wassertiere sich sowohl daran für die Passage orientieren als auch direkt daran entlang bewegen können. Mit den angebotenen Leitelementen positionieren sich die Krebstiere direkt in Augenhöhe vor den Durchgangsöffnungen und können diese so leichter passieren, als wenn sie schräg oder seitlich auf die DurchgangsÖffnungen treffen würden. Insbesondere bei Krebstieren dienen die Leitelemente auch als Steighilfen, die bevorzugt und vorteilhaft horizontal angeordnet sind. Dadurch können sich die Krebstiere einfach in den verschiedenen Höhen in der Wassersäule positionieren oder einfach an und zwischen den Steighilfen entlangwandern. Aber auch eine schräge Anordnung der Steighilfen ist möglich. Manche Krebstiere laufen auch bevorzugt am Boden entlang, sodass diese über die Steighilfen die Passiereinrichtung von unten nach oben erklimmen können. Desweiteren umrunden die Rückhalteelemente erfindungsgemäß die flächigen Durchgangsöffnungen und verdecken oder überqueren sie nicht. Dadurch können die Wassertiere durch die Durchgangsöffnungen hindurchgelangen, ohne von den Rückhalteelementen irritierend berührt zu werden. Für ein erneutes Durchschwimmen der Durchgangsöffnungen müssten die Tiere in einigem Abstand davor wenden und wieder zurückschwimmen. Insbesondere Krebstiere orientieren sich aber bevorzugt an Substraten. Beim Durchqueren der Durchgangsöffnung orientieren sie sich entsprechend an der umlaufenden Wandung. Haben sie deren Ende erreicht, laufen sie an der Außenseite weiter oder stoßen sich bevorzugt in den freien Wasserkörper ab. Beim Entlanglaufen an der Außenseite der Wandungen erreichen sie die Trägerplatte der Passiereinrichtung und orientieren sich an dieser. Dabei können sie aber nicht an andere Durchgangsöffnungen gelangen, weil diese ebenfalls von geschlossenen Wandungen umgeben sind, die den direkten Zugang versperren. Da diese zusätzlich höher sind als die Krebstiere selbst, müssten diese bewusst die Bewegungsrichtung ändern. Zudem empfinden die Tiere die dünnen Wandungen als relativ scharfkantig. Deshalb umrunden sie die Wandungen lieber oder laufen über diese hinweg und gelangen nicht zu weiteren Durchgangsöffnungen (die auf die Tiere wie dunkle Löcher am Ende der Wandungen wirken), durch die sie zurückschwimmen könnten. Die umlaufenden Wandungen können beispielsweise als in der Länge an die Tiere angepasste Rohrstutzen mit konstantem Durchmesser ausgebildet sein. Eine trichterförmige Ausbildung mit von der Trägerplatte abnehmendem Durchmesser erhöht noch die Rückhaltewirkung, ist aber konstruktiv weniger einfach umzusetzen. Zusätzlich verringern die geschlossenen Wandungen noch den Kontakt und die Verweilzeit der Tiere an den Durchgangsöffnungen, sodass es zu keinem Stau nach der Passage kommt.

Mit der vorliegenden Erfindung wird eine schonende Größensortierung von lebenden Wassertieren, in der Anwendung bevorzugt und vorteilhaft insbesondere von Krebstieren, besonders bevorzugt von Garnelen, in landgestützter Aquakulturhaltung erreicht. Das Prinzip basiert auf der freiwilligen und selbstständigen Sortierung der Tiere. Die Tiere werden nicht aktiv durch eine Sortiervorrichtung gezwungen oder sogar dem Wasser entnommen. Mittels der Erfindung ist eine stressfreie Sortierung direkt im Haltungstank im Wasser möglich, und es wird dabei keine Panik ausgelöst, wodurch die Tiere beim Sortieren unverletzt bleiben. Ebenso kann auf teure Sortiermaschinen (auch solche, bei denen die Tiere temporär aus dem Wasser entnommen werden) verzichtet und der Personalaufwand deutlich minimiert werden. Der Arbeitsaufwand beschränkt sich lediglich auf die Einbringung der Sortiervorrichtung in den Haltungstank. Auch kann die Sortiervorrichtung dauerhaft im Tank verbleiben, sodass kontinuierlich kleinere Tiere Bereiche mit gemischten Tiergrößen verlassen können und Garnelen einer Größe zusammen kultiviert werden.

Gemäß einer Ausgestaltung der ersten Ausführungsalternative der Erfindung können bevorzugt und vorteilhaft die Steighilfen platten- oder keilförmig ausgebildet ein. Bei einer plattenförmigen Ausbildung kann es sich um einfache Stege oder Winkel handeln, die an die Trägerplatte montiert sind. Dabei können die Steighilfen durchgängig in mehreren Ebenen zwischen den Reihen von flächigen Durchgangsöffnungen verlaufen. Sie können aber auch abschnittsweise ausgebildet und treppenartig in verschiedenen Ebenen angeordnet sein. Schließlich können sie auch verzweigt ausgebildet sein. Im Stand der Technik wurde auf die Veröffentlichung DE 10 2010 021 606 B4 hingewiesen, die sich speziell mit Steighilfen beschäftigt und viele verschiedene Ausführungsformen aufzeigt, die für die vorliegende Erfindung geeignet sind.

Grundsätzlich sollen die Durchgangsöffnungen eine solche Ausgestaltung zeigen, dass die Tiere weitgehend passgenau, aber berührungsfrei hindurchpassen. Dabei sind die Öffnungen so geformt, dass eine Größensortierung gut funktionieren kann, d.h. sie sollen den Körpermaßen, insbesondere der Höhe und der Breite der Tiere, gerecht werden. Es eigenen sich sowohl runde als auch ovale oder sogar eckige Formen. Daher können die flächigen Durchgangsöffnungen bei der ersten Ausführungsalternative der Erfindung bevorzugt und vorteilhaft regelmäßig kreisförmig oder rechteckig oder unregelmäßig ausgebildet sein. Die Grenzen für die Formgestaltung ergeben sich aus der Herstellbarkeit der Trägerplatte bzw. der Durchgangsöffnungen in der Trägerplatte. Auch schlitzförmige Ausgestaltungen, wie aus dem Stand der Technik bekannt, sind möglich, ebenso rauten- oder drachenförmige Durchgangsöffnungen. Schließlich kann bei dieser Erfindungsalternative bevorzugt und vorteilhaft noch die Größe der Durchgangsöffnungen mittels zwei Platten mit Durchgangsöffnungen einstellbar sein, wobei die Platten in der Passiereinrichtung gegeneinander verschiebbar angeordnet sind. Diese Ausführungsvariante kann insbesondere mit einer Gittereinrichtung zur Sortierung von Fischen erreicht werden, wie sie in der oben bereits genannten DE 10 2018 130 232 B3 ausführlich beschrieben ist, wobei die dort beschriebene Gittereinrichtung für Fische analog zu der hier beanspruchten Passiereinrichtung für Krebstiere zu sehen ist. Durch die Verschiebbarkeit zweier Trägerplatten mit Durchgangsöffnungen gegeneinander kann der effektive Querschnitt des Durchgangs einfach an die Größe der zu sortierenden Wassertiere angepasst werden. Weiterhin können mehrere Gittereinrichtungen in Parallelschaltung vorgesehen sein, die zunehmend kleinere Öffnungen aufweisen, um Kohorten von Wassertieren in verschiedenen, aufeinanderfolgenden Bereichen sammeln zu können. Auch komplexere Formen der (effektiven) Durchgangsöffnungen sind durch das Übereinanderschieben von entsprechenden Formen von Durchgangsöffnungen erreichbar.

Bei der ersten Ausführungsalternative der Erfindung sind in einer Passiereinrichtung mehrere flächige Durchgangsöffnungen auf einer Trägerplatte, also in einer gemeinsamen Ebene, regelmäßig in Spalten und Reihen oder unregelmäßig angeordnet. Ist die Passiereinrichtung in einen Wassertank eingebracht, schließt die Trägerplatte am Boden des Wassertanks dicht an, die erste Durchgangsöffnung liegt in einiger Höhe über dem Boden. Der verbleibende, relativ breite Steg kann sich insbesondere für Krebstiere, die häufig auf dem Boden laufen, als Hindernis erweisen. Deshalb und zur Bereitstellung einer zur ersten Ausführungsalternative der Erfindung konstruktiv anders ausgeführten Vorrichtung, wobei diese darauf beruht, dass von nebeneinander angeordneten, winkligen Leitelementen spaltförmige Durchgangsöffnungen gebildet werden, geht eine zweite Ausführungsalternative der Erfindung davon aus, dass die Leitelemente als Winkelschienen mit einem unveränderlichen Innenwinkel und einem unveränderlichen Außenwinkel ausgebildet sind und dass die Breite der spaltförmigen Durchgangsöffnungen durch die Beabstandung benachbarter Winkelschienen einstellbar ist. Dadurch kann eine (idealisierte) "Eindimensionalität" der spaltförmigen Durchgangsöffnungen gegenüber der "Zweidimensionalität" der flächigen Durchgangsöffnungen gemäß der ersten Ausführungsvariante der Erfindung angeboten werden. Die spaltförmigen Durchgangsöffnungen erstrecken sich über die gesamte Höhe der Passiereinrichtung (wobei konstruktiv bedingt am Boden des Wassertanks ein kleiner Steg vorhanden sein kann) und können insbesondere von Krebstieren auch am Boden laufend einfach passiert werden. Die Leitelemente sind als starre, d.h. in ihrem Innen- resp. Außenwinkel unveränderliche Winkelschienen ausgebildet und weisen eine Spitze (Außenwinkel) und eine Öffnung (Innenwinkel) auf. Mehrere Winkelschienen sind mit ihren Spitzen beabstandet nebeneinander angeordnet. Die Spitzen zeigen zum durchgangsfördernden Bereich. Ankommende Krebstiere werden von den Spitzen der Winkelschienen in Richtung auf die spaltförmigen Durchgangsöffnungen geleitet. Nach dem Durchgang befinden sich die Krebstiere im durchgangshemmenden Bereich. Hier sehen sie vor allem die weiten Öffnungen der Winkelschienen, die aber im Innenwinkel verschlossen sind. Ein Zurücckommen in den durchgangsfördernden Bereich ist für die Krebstiere nur möglich, wenn sie sich zwischen zwei benachbarten Winkelschienen in die spaltförmige Durchgangsöffnung hindurchfädeln.

Die spaltförmigen Durchgangsöffnungen sind in ihrer Größe bzw. Breite einstellbar ausgebildet, sodass eine Breitenanpassung an die zu sortierenden Wassertiere stattfinden kann. Dabei sind die Durchgangsöffnungen aber in der Höhe nicht bzw. auf die Höhe der Passiereinrichtung begrenzt, sodass insbesondere Krebstiere gut sortiert werden können, die sich charakteristisch in ihrem Wachstumsstadium in der Breite unterscheiden. Deshalb ist erfindungsgemäß vorgesehen, dass die Breite der spaltförmigen Durchgangsöffnungen durch die Beabstandung benachbarter Winkelschienen einstellbar ist. Hierbei handelt es sich um eine konstruktiv gut umzusetzende Maßnahme. Die Winkelschienen werden beispielsweise entlang eines Gestells mit einem Langloch verschiebbar angeordnet und mit Feststellschrauben fixiert. Durch seitliches Verschieben der Winkelschienen können die spaltförmigen Durchgangsöffnungen dann in ihrer Breite einfach eingestellt werden. Dabei ist es sinnvoll, alle Breiten gleich zu bemessen. Aber auch unterschiedliche Breiten sind umsetzbar, wenn bei anderen Anwendungen der Vorrichtung gewünscht.

Da die spaltförmigen Durchgangsöffnungen sich bis nahezu auf den Boden eines Wassertanks erstrecken können, können die Krebstiere auch auf dem Boden laufend oder kurz über diesem schwimmend hindurchgelangen. Bei einer größeren Anzahl von Tieren kann es aber zu einem Stau und zu möglichem Stress oder Verletzungen der Tiere vor den spaltförmigen Durchgangsöffnungen kommen. Gemäß einer vorteilhaften und bevorzugten Modifikation dieser Ausführungsalternative ist daher vorgesehen, dass die Winkelschienen zusätzlich mit Steighilfen ausgerüstet sind, wobei diese über mehrere nebeneinander angeordnete Winkelschienen erstreckbar sind. Wie bei der ersten Ausführungsalternative können die Tiere dann an der Passiereinrichtung hochsteigen. Dabei können die Steighilfen nur von kurzen Abschnitten gebildet sein, sodass die Krebse dieselbe spaltförmige Durchgangsöffnung nur in größerer Höhe passieren können. Die Steighilfen können sich aber auch über mehrere benachbarte Winkelschienen erstrecken, sodass die Krebstiere beim Aufsteigen auch zwischen den spaltförmigen Durchgangsöffnungen wechseln können. Auch für die zweite Ausführungsvariante der Erfindung gilt, dass die Winkelschienen schräg in einen Wassertank (wobei eine schräge Anordnung sowohl in der Breite als auch in der Länge des Wassertanks möglich ist) eingebracht werden können, solange durch die Passiereinrichtung die Trennung des durchgangsfördernden und des durchgangshemmenden Bereichs erhalten bleibt. Bevorzugt und vorteilhaft können die Winkelschienen vertikal und/oder die Steighilfen horizontal angeordnet sein. Für die Steighilfen gelten dieselben Randbedingungen wie bei der ersten Ausführungsalternative. Sie können also auch schräg angeordnet sein, wobei der Grad der Schräge den Krebsen noch ein (auftriebsunterstütztes) Aufsteigen erlauben soll.

Weiter oben wurde bereits ausgeführt, dass die großen Öffnungen der Winkelschienen zum durchgangshemmenden Bereich hin ein Zurückschwimmen der Wassertiere in den durchgangsfördernden Bereich weitgehend verhindern. Damit zuverlässig gar keine Tiere zurückschwimmen, ist es gemäß einer Erfindungsausgestaltung zur zweiten Ausführungsalternative bevorzugt und vorteilhaft, wenn die Winkelschienen zum durchgangshemmenden Bereich hin flexible Bürstenleisten als zusätzliche Rückhalteelemente beiderseits der spaltförmigen Durchgangsöffnungen aufweisen. Durch diese weichen Bürsten (oder Kämme) werden die spaltförmigen Durchgangsöffnungen noch weiter verengt, sodass die Krebse die biegsamen Bürsten beim Hindurchschwimmen etwas beiseite drücken müssen. Da der Druck dabei aber sehr gering ist, irritiert oder verletzt dies die Tiere nicht. Nach dem Durchschwimmen verringern oder verdecken dann die Bürsten die spaltförmige Durchgangsöffnung und verhindern zuverlässig ein Zurückschwimmen.

Wichtig für das Wohlbefinden der Wassertiere ist auch die ungehinderte, möglichst hohe Wasserzirkulation im Wassertank. Damit diese nicht durch das Einsetzen einer Passiervorrichtung behindert wird, ist es gemäß einer Modifikation für beide Ausführungsalternativen der Erfindung bevorzugt und vorteilhaft, wenn in der Passiereinrichtung ein Strömungselement für den Wasseraustausch zwischen dem durchgangsfördernden Bereich und dem durchgangshemmenden Bereich vorgesehen ist, wobei das Strömungselement eine Passiersperre umfasst, sodass die Wassertiere das Strömungselement nicht passieren können. Bei dem Strömungselement kann es sich beispielsweise um eine oder mehrere Öffnungen (beispielsweise kreis- oder spaltförmig) außerhalb der Sortierstruktur der Passiereinrichtung, aber innerhalb der Passiereinrichtung handeln, die beispielsweise mit einem Netz als Passiersperre bedeckt sind. Bevorzugt und vorteilhaft kann das Strömungselement aber auch als Rohr und die Passiersperre als Maschengitter ausgebildet sein, wobei das Rohr beispielsweise im unteren Bereich der Passiereinrichtung angeordnet sein kann.

Gemäß einer nächsten Modifikation beider Ausführungsvarianten der Erfindung kann bevorzugt und vorteilhaft vorgesehen sein, dass die Passiereinrichtung modular zur Anpassung an unterschiedliche Wassertanks ausgebildet ist. Beispielsweise können Randelemente bei der ersten Ausführungsform mit flächigen Durchgangsöffnungen vorgesehen sein. Hier soll wiederum auf die DE 10 2018 130 232 B3 verwiesen sein, in der ausführlich die Einpassung der Trägerplatte der Gittereinrichtung mit einer umlaufenden Dichtlippe erläutert wird. Bei der zweiten Ausführungsvariante der Erfindung ist eine Anpassbarkeit an unterschiedliche Wassertankformen relativ einfach erreichbar durch die Anzahl der nebeneinander angeordneten Winkelschiene. Auch können diese in ihrer Länge modular zusammengesetzbar ausgebildet sein, um auch eine Anpassung der Passiereinrichtung in der Höhe des Wassertanks bzw. der Wassersäule zu erreichen.

Durch das Vorsehen einer Passiereinrichtung in einem Wassertank wird dieser in zwei Bereiche unterteilt. Um mehr als zwei Bereiche mit abgestufter Größensortierung zu erhalten, ist es gemäß einer nächsten Erfindungsausgestaltung für beide Ausführungsvarianten bevorzugt und vorteilhaft, wenn mehrere Passiereinrichtungen beabstandet zueinander im Wassertank anordenbar sind, wobei die Durchgangsöffnungen in Richtung der durchgangshemmenden Bereiche mit abnehmender Größe ausgebildet sind. Die Krebstiere schwimmen ihrer Größe entsprechend freiwillig durch eine oder mehrere Passiereinrichtungen hindurch. Durch das Trennen der Tiere an jeder Passiereinrichtung entstehen immer ein "durchgangsfördernder Bereich" (Nicht-Sortierbereich) und ein "durchgangshemmender Bereich" (Sortierbereich). Dabei wird jeweils der durchgangshemmende Bereich der einen Passiereinrichtung zum durchgangsfördernden Bereich der nachfolgenden Passiereinrichtung. Die Krebstiere sortieren sich freiwillig mit abnehmender Größe.

Die Hauptanwendung für die beiden erfindungsgemäß beanspruchten Ausführungsvarianten einer Vorrichtung freiwilligen Selbstsortierung von lebenden Wassertieren bezieht sich auf die Selbstsortierung von Krebstieren, insbesondere Garnelen. In zahlreichen Laborversuchen bei der Anmelderin hat sich gezeigt, dass beide Varianten sehr gute Ergebnisse mit einem hohen Qualitätsanspruch bei der Selbstsortierung von Garnelen ergeben. Grundsätzlich sollen alle zu sortierenden Wassertiere, insbesondere auch die empfindlichen Garnelen, freiwillig und weitgehend stressfrei von dem durchgangsfördernden Bereich in den durchgangshemmenden Bereich gelangen. Deshalb ist es in einer konstruktiven Anwendung der beanspruchten Vorrichtung in einem Wassertank sinnvoll, den Garnelen zusätzliche Anreize zu geben, zum einen, um die Sortiergeschwindigkeit zu erhöhen, zum anderen, um ein Zurückschwimmen weitgehend zu verhindern. Dabei hat es sich als vorteilhaft erwiesen, wenn in dem zumindest einen durchgangshemmenden Bereich des Wassertanks verschiedene Stimuli zur Anlockung der Krebstiere vorgesehen sind. Hierbei kann bevorzugt und vorteilhaft vorgesehen sein, dass die Stimuli von einer Futterquelle, einer Lichtquelle und/oder einer hellen Einfärbung gebildet sind. Die Tiere werden je nach ihrer Art und Gattung mehr oder weniger angezogen von Futter, hellem Licht und im Wasser vorkommenden, hellen Farben. Abgestoßen werden sie hingegen von Dunkelheit und dunklen Farben. Diese Erkenntnisse sind ausführlich dargestellt in der **Veröffentlichung** "Influence of feeding sequence, light and colour on the performance of a self-grading-system designed for turbot (Scophthalmus maximus)" von M. Bögner et al. (in Aquacultural Engineering 77 (2017) 1-8). In Anlehnung an die gewonnenen Erkenntnisse ist es zudem bei der Erfindung förderlich, wenn die Passiereinrichtung zu dem durchgangsfördernden Bereich eine helle Einfärbung und/oder zu dem durchgangshemmenden Bereich eine dunkle Einfärbung aufweist. Die Tiere werden also aus dem durchgangsfördernden Bereich durch die helle Einfärbung, die vorteilhaft wie im Wasser vorkommend, also weiß, hellblau, hellgelb oder hellgrün, ausgebildet sein kann, auf der Vorderseite der Passiereinrichtung in den durchgangshemmenden Bereich gelockt und am Zurückschwimmen in den durchgangsfördernden Bereich durch die dunkle Einfärbung, vorteilhaft wie im Wasser vorkommend, also schwarz, dunkelblau oder dunkelgrün, auf der Rückseite der Passiereinrichtung gehindert. Bei Garnelen hat es sich mittlerweile herausgestellt, dass sie von hellem Licht und einer dunklen Bodenfarbe besonders angezogen werden.

Schließlich können bei der mit der vorliegenden Erfindung beanspruchten Sortiervorrichtung für lebende Wassertiere noch weitere Modifikationen vorgesehen sein, siehe beispielsweise auch die DE 10 2018 130 232 B3**.** Weitere Erläuterungen zu der vorliegenden Erfindung und ihre angesprochenen Modifikationen können den nachfolgend aufgezeigten Ausführungsbeispielen entnommen werden.

### Ausführungsbeispiele

Nachfolgend werden die mit der vorliegenden Erfindung beanspruchte Sortiervorrichtung für lebende Wassertiere, insbesondere Garnelen, und ihre bevorzugten Modifikationen anhand der schematischen Figuren zum besseren Verständnis der Erfindung noch weitergehend erläutert. Dabei zeigen die
- **Fig. 1A** bis **1D**: eine erste Sortiervorrichtung (erste Ausführungsalternative),
- **Fig. 2**: ein erstes Detail zur Größenänderung der Durchgangsöffnungen (erste Ausführungsalternative),
- **Fig. 3**: ein zweites Detail zur Größenänderung der Durchgangsöffnungen (erste Ausführungsalternative),
- **Fig. 4A** bis **4C**: eine zweite Sortiervorrichtung (zweite Ausführungsalternative),
- **Fig. 5**: ein Detail im Bereich der Steighilfen (zweite Ausführungsalternative),
- **Fig. 6**: ein Detail im Bereich der Rückhaltelemente (zweite Ausführungsalternative),
- **Fig. 7**: ein Detail zur Größenänderung der Durchgangsöffnungen (zweite Ausführungsalternative) und
- **Fig. 8**: eine konstruktiv ausgearbeitete Sortiervorrichtung (zweite Ausführungsalternative).

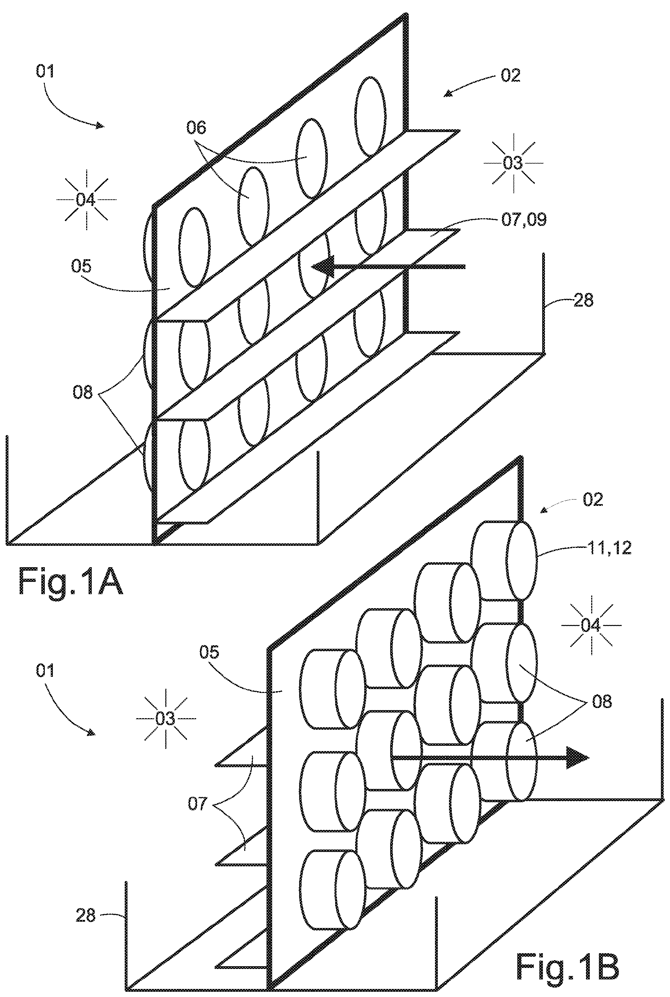

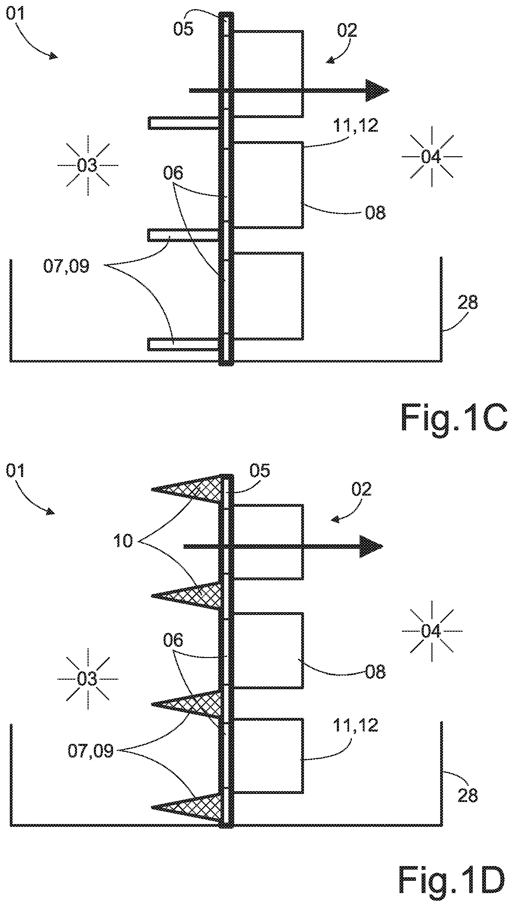

In den **Fig. 1A** bis **1D** ist eine Sortiervorrichtung **01** in einem Wassertank **28** für lebende Wassertiere, insbesondere Garnelen, im Bereich einer vertikalen Passiereinrichtung **02** in der ersten Ausführungsalternative dargestellt. Die **Fig. 1A** zeigt eine perspektivische Vorderansicht (vom durchgangsfördernden Bereich **03** her), die **Fig.** 1B zeigt eine perspektivische Rückansicht (vom durchgangshemmenden Bereich **04** her). Die Fig. **1C** zeigt eine Seitenansicht mit einer ersten Ausführungsform der Steighilfe **09,** die **Fig. 1D** zeigt eine zweite Ausführungsform. Die Passiereinrichtung **02** ist innerhalb eines angedeuteten Wassertanks **28** gezeigt, in den sie eingebaut werden kann. Mögliche Einbauformen sind beispielsweise der DE 10 2018 130 232 B3 zu entnehmen. Die Passiereinrichtung **02** unterteilt den Wassertank **28** in einen durchgangsfördernden Bereich **03** (hier sind die Garnelen unsortiert) und einen durchgangshemmenden Bereich **04** (hier sind die Garnelen sortiert bzw. vorsortiert, wenn mehrere, in Reihe geschaltete Passiereinrichtungen **02** in einem Wassertank **28** vorgesehen sind. Die Garnelen sollen freiwillig und stressfrei aus dem durchgangsfördernden Bereich **03** in den durchgangshemmenden Bereich **04** schwimmen und möglichst nicht wieder zurückschwimmen. Die Passiereinrichtung **02** umfasst in der der ersten Ausführungsalternative eine Trägerplatte **05,** die in zwei perspektivischen Ansichten dargestellt ist. Sie weist eine Vielzahl von flächigen Durchgangsöffnungen **06** auf, die im dargestellten Ausführungsbeispiel kreisrund ausgebildet und in mehreren Reihen und Spalten angeordnet sind. Zum durchgangsfördernden Bereich **03** hin weist die Passiereinrichtung **02** Leitelemente **07** auf, die die Garnelen zu den Durchgangsöffnungen **06** hinleiten sollen (siehe **Fig. 1A**). Zum durchgangshemmenden Bereich **04** hin weist die Passiereinrichtung **02** Rückhalteelemente **08** auf, die die Garnelen am Zurückschwimmen hindern sollen (siehe **Fig. 1B**).

Im gezeigten Ausführungsbeispiel sind die Leitelemente **07** als Steighilfen **09** ausgebildet, die weitgehend horizontal angeordnet sind. Diese sollen den Garnelen den Aufstieg an der Trägerplatte **05** erleichtern, damit alle Durchgangsöffnungen **06** von den Tieren genutzt werden können. Die Steighilfen **09** können beispielsweise plattenförmig (siehe **Fig.** 1C) oder keilförmig (siehe **Fig. 1D**) ausgebildet sein. Bei der keilförmigen Ausbildung der Steighilfen **09** sind an den Stirnseiten dreieckige Siebe **10** angeordnet, die eine Wasserdurchströmung der Steighilfen **09** ermöglichen, die Garnelen aber zurückhalten. Weitere Ausbildungsformen für die Steighilfen **09** sind beispielsweise der DE 10 2010 021 606 B4 zu entnehmen. Weiterhin sind die Rückhalteelemente **08** als umlaufende, d.h. geschlossene Wandungen **11** ausgebildet, die der Kontur der Durchgangsöffnungen **06** folgen. Im gezeigten Ausführungsbeispiel handelt es sich um kurze Rohrstutzen **12** mit kreisrundem Querschnitt, die die kreisrunden Durchgangsöffnungen **06** umgeben (siehe **Fig. 1B**). Dabei weisen die Wandungen **11** eine Höhe auf, die größer ist als die Größe der Krebstiere. Da diese die Wandungen **11** dann erst überwinden müssten, werden sie eher an einer Rückbewegung in den durchgangsfördernden Bereich **03** gehindert und wandern weiter in den durchgangshemmenden Bereich **04** hinein.

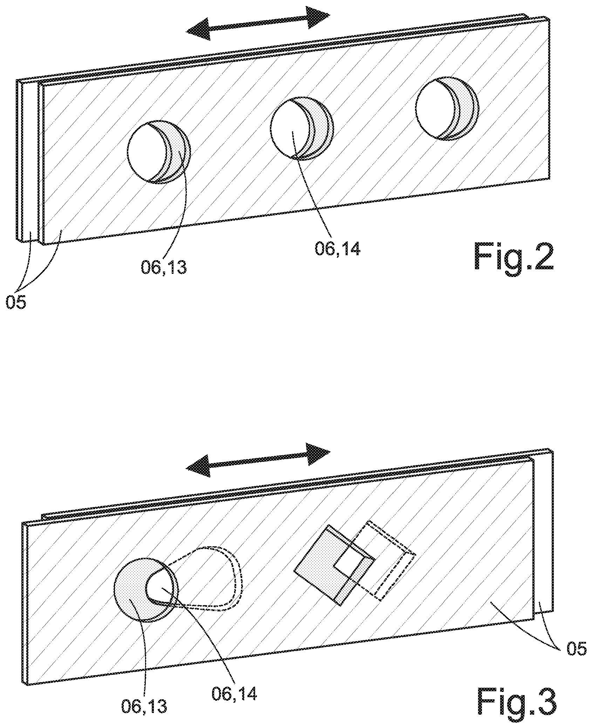

In der **Fig. 2** ist schematisch eine Möglichkeit der Größenänderung der Durchgangsöffnungen **06** dargestellt. Es werden zwei Trägerplatten **05** mit einer identischen Anordnung und Größe der Durchgangsöffnungen **06** übereinandergelegt und zur Größenvariation gegeneinander verschoben. So kann eine große Passieröffnung **13** in eine kleine Passieröffnung **14** überführt werden und umgekehrt. In der **Fig. 3** sind noch andere Formen von Durchgangsöffnungen **06** mit Größenveränderbarkeit dargestellt, wobei jeweils eine Größenvariation zwischen der größten Passieröffnung **13** und der kleinsten Passieröffnung **14** dargestellt ist. Beispielsweise können die Durchgangsöffnungen **06** rhombenförmig ausgebildet sein. Auch hier ergibt sich eine einfache Größenverstellbarkeit durch Verschieben zweier Trägerplatten **05.** Weiterhin ist es auch möglich, zwei Trägerplatten **05** mit unterschiedlich ausgeformten Durchgangsöffnungen **06** vorzusehen, z. B. eine kreisrunde und eine unregelmäßige, birnenförmige Durchgangsöffnung **06.** In der Überlappung ergeben sich dann unregelmäßige Passieröffnungen **13, 14,** die sich in ihrer Größe sehr genau einstellen lassen. Insbesondere für Garnelen werden kleine, in ihrer Größe genau auf die Garnelen angepasste Passieröffnungen **13, 14** benötigt. Darüber hinaus ist es sehr sinnvoll, bei einer Verkleinerung der Durchgangsöffnung **06** das Verhältnis von Höhe und Breite der Passieröffnung **13** möglichst konstant zu halten. Insbesondere bei viereckigen Durchgangsöffnungen **06** bleibt dieses Verhältnis idealerweise konstant.

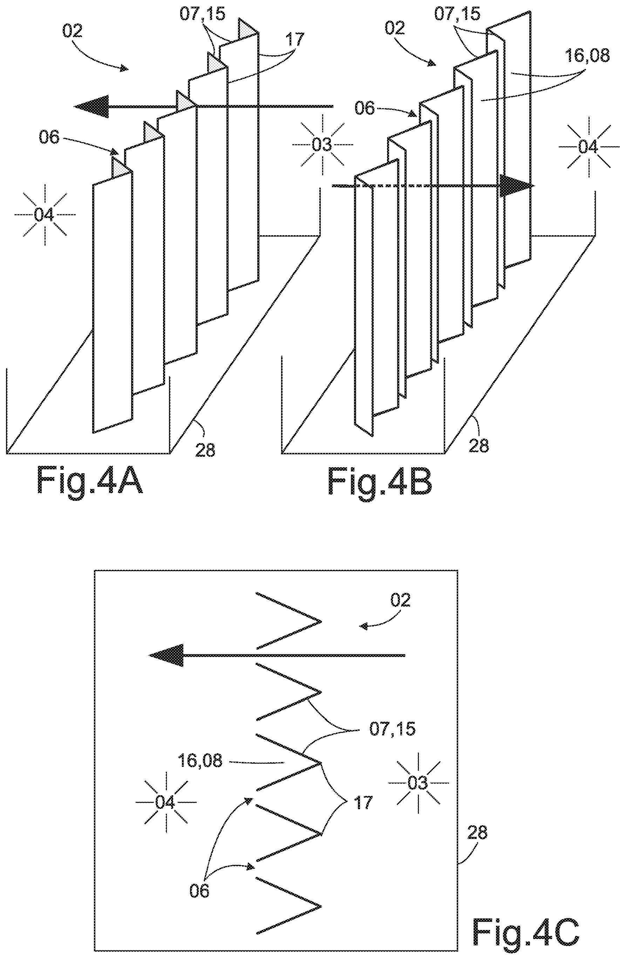

In den **Fig. 4A** bis **4C** ist die Passiereinrichtung **02** für die Sortiervorrichtung **01** in einem Wassertank **28** in der zweiten Ausführungsalternative schematisch dargestellt. Die **Fig. 4A** zeigt eine perspektivische Vorderansicht (vom durchgangsfördernden Bereich **03** her), die **Fig. 4B** zeigt eine perspektivische Rückansicht (vom durchgangshemmenden Bereich **04** her). Die **Fig. 4C** zeigt eine schematische Draufsicht. In der **Fig. 4A** sind als Leitelemente **07** vertikale Winkelschienen **15** dargestellt. Diese weisen einen unveränderlichen, spitzen Innenwinkel **16** und einen unveränderlichen großen Außenwinkel **17** auf. Dabei liegen die Außenwinkel **17** auf der Seite des durchgangsfördernden Bereichs **03,** die Innenwinkel **16** liegen auf der Seite des durchgangshemmenden Bereichs **04.** Zwischen nebeneinander angeordneten Winkelschienen **15** sind jeweils die Durchgangsöffnungen **06** mit spaltförmiger Ausprägung ausgebildet, die sich über die ganze Höhe der Winkelschienen **15** erstrecken. Die Innenwinkel **16** bilden die Rückhalteelemente **08** aus. Die Garnelen schwimmen in sie hinein und verfehlen die spaltförmigen Durchgangsöffnungen **06.**

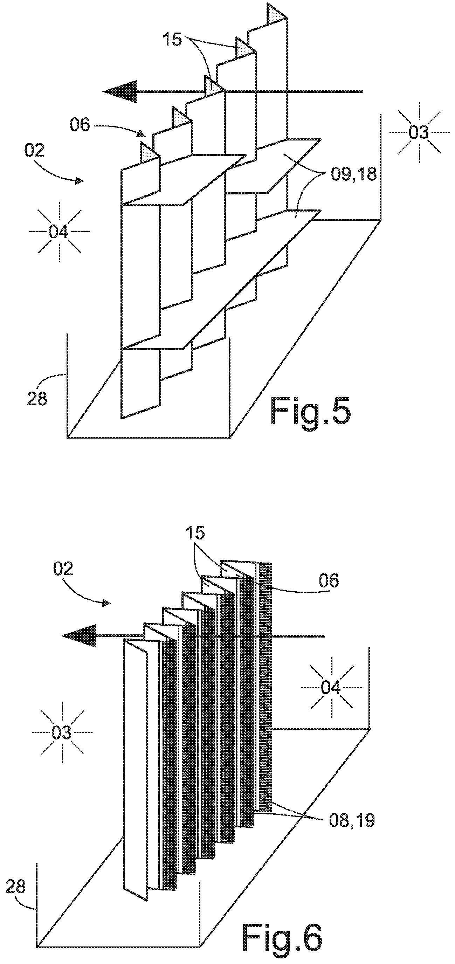

In der **Fig. 5** ist die Passiereinrichtung **02** gemäß **Fig. 4A** (perspektivische Vorderansicht, vom durchgangsfördernden Bereich **03** her) mit horizontalen Steighilfen **09** dargestellt. Im gezeigten Ausführungsbeispiel handelt es sich um einfache flache Stege **18,** die in unterschiedlichen Ebenen abschnittsweise oder durchgängig über einen oder mehrere Winkelschienen **15** hinweg angeordnet sind.

In der **Fig. 6** ist die Passiereinrichtung **02** gemäß **Fig. 4B** (perspektivische Rückansicht, vom durchgangshemmenden Bereich **04** her) mit zusätzlichen Rückhalteelementen **08** dargestellt. Dabei handelt es sich um weiche, biegsame Bürstenleisten **19,** die jeweils rechts und links der spaltförmigen Durchgangsöffnungen **06** angeordnet sind. Sie sind in Verlängerung der Schenkel der Winkelschienen **15** befestigt und engen die spaltförmigen Durchgangsöffnungen **06** ein, sodass ein Zurückschwimmen unterbunden werden kann. Beim Hindurchschwimmen behindern sie die Garnelen nicht, sondern biegen sich zurück und streichen leicht an ihren Seiten entlang.

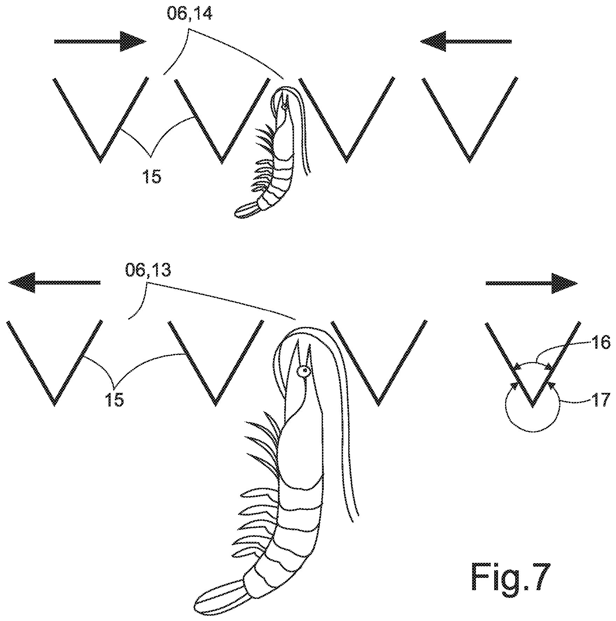

Die **Fig. 7** zeigt schematisch die Veränderbarkeit der Breite der spaltförmigen Durchgangsöffnungen **06** bei der zweiten Ausführungsalternative mit starren Winkelschienen **15.** Die veränderliche Spaltbreite zwischen einer maximalen Passieröffnung **13** und einer minimalen Passieröffnung **14** wird durch eine entsprechend veränderte Beabstandung zwischen benachbarten Winkelschienen **15** erreicht, wobei die Innenwinkel **16** und die Außenwinkel **17** konstant sind.

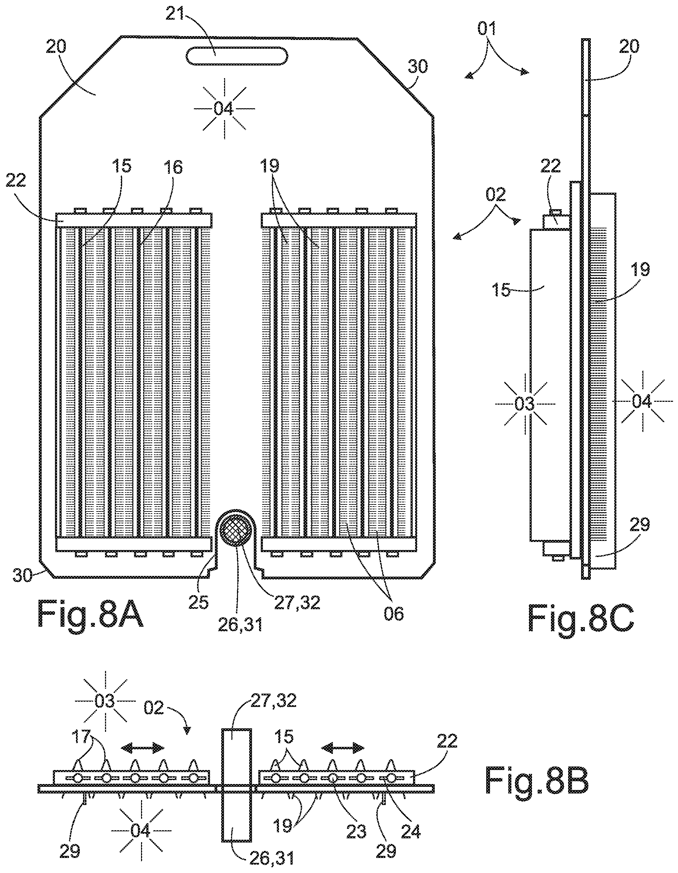

Die **Fig. 8A** bis **8C** zeigen die Vorrichtung **01** mit der Passiereinrichtung **02** gemäß der zweiten Ausführungsvariante im Detail für den Einbau in einem Wassertank **28** in der Ansicht (**Fig. 8A****,** vom durchgangshemmenden Bereich **04** her), Draufsicht **(****Fig. 8B****)** und Seitenansicht **(****Fig. 8C****).** Dargestellt ist eine Einschubplatte **20** mit einem Handgriff **21** zum Einbringen in einen Wassertank. Abgeschrägte Ecken **30** erleichtern das Ein- und Ausbringen sowie das Festlegen der Einschubplatte **20** in den Wassertank **28** bzw. passen sich an die Formgebung des Wassertanks **28** an. Weiterhin sind die Winkelschienen **15** (Einsicht in die Innenwinkel 16) mit den flexiblen Bürstenleisten **19** zu erkennen. Zwischen den Bürstenleisten **19** erstrecken sich vertikal die spaltförmigen Durchgangsöffnungen **06.** In der Draufsicht sind die Winkelschienen **15,** die mit ihren Außenwinkeln **17** zum durchgangsfördernden Bereich **03** zeigen, zu erkennen. Weiterhin ist eine Verstelleinrichtung **22** zur Veränderung der Spaltbreite der Durchgangsöffnungen **06** dargestellt. Die Winkelschienen **15** sind mit Feststellschrauben **23** verbunden, die in einem Langloch **24** verschoben und festgeklemmt werden können. Auf diese Weise können die Winkelschienen **15** sehr einfach seitlich verschoben und festgelegt werden. Die Spaltbreite der Durchgangsöffnungen **06** kann konstant oder unterschiedlich breit eingestellt werden. Bei einer konstanten Einstellung können alle Winkelschienen **15** auch gemeinsam oder gruppenweise über Verstellhebel **29** verschoben werden. In der Mitte der Einschubplatte **20** der Passiereinrichtung **02** ist eine Aussparung **25** vorgesehen. In dieser befindet sich ein Strömungselement **26,** das dem ungehinderten Wasseraustausch zwischen dem durchgangsfördernden Bereich **03** und dem durchgangshemmenden Bereich **04** dient. Im gezeigten Ausführungsbeispiel handelt es sich bei dem Strömungselement **26** um ein einfaches Rohr **31.** An seinem Ende zum durchgangshemmenden Bereich **04** ist das Rohr **26** mit einem Maschengitter **32** als Passiersperre **27** bedeckt, um die Garnelen zurückzuhalten. Andere Ausführungsformen von Strömungselement **26** und Passiersperre **27** sind ebenfalls möglich. Sie müssen nur den Funktionen der ungestörten Wasserzirkulation bei gleichzeitiger Verhinderung des Durchschwimmens der Passiervorrichtung **02** genügen.

Weiterhin können bei der Sortiervorrichtung **01** mehrere Passiereinrichtungen **02** beabstandet zueinander im Wassertank **28** angeordnet sein, wobei die flächen- oder spaltförmigen Durchgangsöffnungen **06** in Richtung der durchgangshemmenden Bereiche **04** mit abnehmender Größe ausgebildet sind. Im durchgangshemmenden Bereich **04** können zusätzlich verschiedene Stimuli zur Anlockung der Garnelen vorgesehen sein. Dabei können die Stimuli von einer Futterquelle, einer Lichtquelle und/oder einer Einfärbung gebildet sein. Die Passiereinrichtung **02** kann zu dem durchgangsfördernden Bereich **03** eine helle Einfärbung und/oder zu dem durchgangshemmenden Bereich **04** eine dunkle Einfärbung aufweisen. Bezüglich dieser Ausführungsformen wird auf die Ausführungsbeispiele der DE 10 2018 130 232 B3 verwiesen. Die konstruktive und maßliche Ausgestaltung der Passiereinrichtung **02** der mit der Erfindung beanspruchten Sortiervorrichtung **01** unterliegt jeweils den Anforderungen in der jeweiligen Anwendung. Dabei können die kreisförmigen Durchgangsöffnungen **06** einen Durchmesser in einem Bereich von bis zu 30 mm, die Steighilfen **09** eine Höhe in einem Bereich von 100 mm, die Wandungen **11** eine Höhe in einem Bereich von 50 mm und einen Durchmesser in einem Bereich von 28 mm, die Winkelschienen **15** eine Öffnungsbreite in einem Bereich von 45 mm und eine Schenkellänge in einem Bereich von 80 mm und/oder die spaltförmigen Durchgangsöffnungen **06** eine Breite in einem Bereich von 10 mm aufweisen.

### Bezugszeichenliste

- **01**: Sortiereinrichtung
- **02**: Passiereinrichtung
- **03**: durchgangsfördernder Bereich
- **04**: durchgangshemmender Bereich
- **05**: Trägerplatte
- **06**: Durchgangsöffnung
- **07**: Leitelement
- **08**: Rückhalteelement
- **09**: Steighilfe
- **10**: Sieb
- **11**: Wandung
- **12**: Rohrstutzen
- **13**: Passieröffnung (max)
- **14**: Passieröffnung (min)
- **15**: Winkelschiene
- **16**: Innenwinkel von 15
- **17**: Außenwinkel von 15
- **18**: Steg
- **19**: Bürstenleiste
- **20**: Einschubplatte
- **21**: Handgriff
- **22**: Verstelleinrichtung
- **23**: Feststellschraube
- **24**: Langloch
- **25**: Aussparung
- **26**: Strömungselement
- **27**: Passiersperre
- **28**: Wassertank
- **29**: Verstellhebel von 22
- **30**: abgeschrägte Ecke von 20
- **31**: Rohr als 26
- **32**: Maschengitter als 27

## Patentansprüche

1. Vorrichtung (01) zur freiwilligen Selbstsortierung von lebenden Wassertieren mit zumindest einer Passiereinrichtung (02), durch die ein Wassertank (28) in einen durchgangsfördernden Bereich (03) und einen durchgangshemmenden Bereich (04) unterteilt ist und die mehrere, in ihrer Größe an die zu sortierenden Wassertiere anpassbare Durchgangsöffnungen (06) aufweist, wobei an der Passiereinrichtung (02) zum durchgangsfördernden Bereich (03) hin Leitelemente (07) und zum durchgangshemmenden Bereich (04) hin Rückhalteelemente (08) angeordnet sind, wobei die Durchgangsöffnungen (06) flächig ausgebildet und in einer Trägerplatte (05) angeordnet sind, und eine Höhe aufweisen, die größer ist als die Höhe der zu sortierenden Wassertiere,
**dadurch gekennzeichnet, dass**
die Leitelemente (07) als Steighilfen (09) und die Rückhalteelemente (08) als umlaufende Wandungen (11) ausgebildet sind, die der Kontur der Durchgangsöffnungen (06) angepasst sind.

2. Vorrichtung (01) nach Anspruch 1,
**dadurch gekennzeichnet, dass**
die Passiereinrichtung (02) vertikal und/oder die Steighilfen (09) horizontal angeordnet sind.

3. Vorrichtung (01) nach Anspruch 1 oder 2,
**dadurch gekennzeichnet, dass**
die Steighilfen (09) platten- oder keilförmig ausgebildet sind.

4. Vorrichtung (01) nach einem der vorangehenden Ansprüche,
**dadurch gekennzeichnet, dass**
die Durchgangsöffnungen (06) regelmäßig kreisförmig oder rechteckig oder unregelmäßig ausgebildet sind.

5. Vorrichtung (01) nach einem der vorangehenden Ansprüche,
**dadurch gekennzeichnet, dass**
die Größe der Durchgangsöffnungen (06) mittels zwei Trägerplatten (05) mit Durchgangsöffnungen (06) einstellbar ist, wobei die Trägerplatten (05) in der Passiereinrichtung (02) gegeneinander verschiebbar angeordnet sind.

6. Vorrichtung (01) zur freiwilligen Selbstsortierung von lebenden Wassertieren mit zumindest einer Passiereinrichtung (02), durch die ein Wassertank (28) in einen durchgangsfördernden Bereich (03) und einen durchgangshemmenden Bereich (04) unterteilbar ist und die mehrere, in ihrer Größe an die zu sortierenden Wassertiere anpassbare Durchgangsöffnungen (06) aufweist, wobei
• an der Passiereinrichtung (02) zum durchgangsfördernden Bereich (03) hin Leitelemente (07) und zum durchgangshemmenden Bereich (04) hin Rückhalteelemente (08) angeordnet sind,
• die Leitelemente (07) winklig mit einem Innenwinkel (16) und einem Außenwinkel (17) ausgebildet sind,
• die Außenwinkel (17) der Leitelemente (07) zum durchgangsfördernden Bereich (03) zeigen,
• die Durchgangsöffnungen (06) in ihrer Breite veränderbar spaltförmig zwischen nebeneinander angeordneten Leitelementen (07) ausgebildet sind und
• die Rückhalteelemente (08) von den Innenwinkeln (16) der Leitelemente (07) ausgebildet sind,
**dadurch gekennzeichnet, dass**
die Leitelemente (07) als Winkelschienen (15) mit einem unveränderlichen Innenwinkel (16) und einem unveränderlichen Außenwinkel (17) ausgebildet sind und dass die Breite der spaltförmigen Durchgangsöffnungen (06) durch die Beabstandung benachbarter Winkelschienen (15) einstellbar ist.

7. Vorrichtung (01) nach Anspruch 6,
**dadurch gekennzeichnet, dass**
die Winkelschienen (15) zusätzlich mit Steighilfen (09) ausgerüstet sind, wobei diese über mehrere nebeneinander angeordnete Winkelschienen (15) erstreckbar sind.

8. Vorrichtung (01) nach Anspruch 7,
**dadurch gekennzeichnet, dass**
die Winkelschienen (15) vertikal und/oder die Steighilfen (09) horizontal angeordnet sind.

9. Vorrichtung (01) nach Anspruch 7 oder 8,
**dadurch gekennzeichnet, dass**
die Winkelschienen (15) zum durchgangshemmenden Bereich (04) hin flexible Bürstenleisten (19) als zusätzliche Rückhalteelemente (08) beiderseits der spaltförmigen Durchgangsöffnungen (06) aufweisen.

10. Vorrichtung (01) nach einem der vorangehenden Ansprüche,
**dadurch gekennzeichnet, dass**
in der Passiereinrichtung (02) ein Strömungselement (26) für den Wasseraustausch zwischen dem durchgangsfördernden Bereich (03) und dem durchgangshemmenden Bereich (04) vorgesehen ist, wobei das Strömungselement (26) eine Passiersperre (27) umfasst, sodass die Wassertiere das Strömungselement (26) nicht passieren können.

11. Vorrichtung (01) nach Anspruch 10,
**dadurch gekennzeichnet, dass**
das Strömungselement (26) als Rohr (31) und das Passierelement (27) als Maschengitter (32) ausgebildet ist.

12. Vorrichtung (01) nach einem der vorangehenden Ansprüche,
**dadurch gekennzeichnet, dass**
die Passiereinrichtung (02) modular zur Anpassung an unterschiedliche Wassertanks (28) ausgebildet ist.

13. Vorrichtung (01) nach einem der vorangehenden Ansprüche,
**dadurch gekennzeichnet, dass** mehrere Passiereinrichtungen (02) beabstandet zueinander in einem Wassertank (28) anordenbar sind, wobei die Durchgangsöffnungen (06) in Richtung der durchgangshemmenden Bereiche (04) mit abnehmender Größe ausgebildet sind.

14. Vorrichtung (01) nach einem der vorangehenden Ansprüche,
**dadurch gekennzeichnet, dass**
die Passiereinrichtung (02) zum durchgangsfördernden Bereich (03) hin eine helle Einfärbung und/oder zum durchgangshemmenden Bereich (04) hin eine dunkle Einfärbung aufweist.

15. Anwendung der Vorrichtung (01) nach einem der vorangehenden Ansprüche auf Krebstiere als lebende Wassertiere.

16. Anwendung der Vorrichtung (01) nach Anspruch 15 auf Garnelen als Krebstiere.

17. Anwendung der Vorrichtung (01) nach einem der vorangehenden Ansprüche auf Wassertanks (28), die im zumindest einen durchgangshemmenden Bereich (04) verschiedene Stimuli zur Anlockung der lebenden Wassertiere aufweisen.

18. Anwendung der Vorrichtung (01) nach Anspruch 17,
**dadurch gekennzeichnet, dass** die Stimuli von einer Futterquelle, einer Lichtquelle und/oder einer Einfärbung gebildet sind.

## Claims

1. A device (01) for the voluntary self-sorting of live aquatic animals, with at least one passage device (02), by means of which a water tank (28) is divided into a through-passage facilitating region (03) and a through-passage obstructing region (04) and which has a plurality of through-passage openings (06) the size of which can be adapted to the aquatic animals to be sorted, wherein on the passage device (02), guide elements (07) are disposed towards the through-passage facilitating region (03) and retaining elements (08) are disposed towards the through-passage obstructing region (04), wherein the through-passage openings (06) are flat in configuration and disposed in a carrier plate (05) and have a height which is greater than the height of the aquatic animals to be sorted,
**characterized in that**
the guide elements (07) are configured as climbing aids (09) and the retaining elements (08) are configured as circumferential walls (11) which are adapted to the contour of the through-passage openings (06).

2. The device (01) as claimed in claim 1,
**characterized in that**
the passage device (02) is disposed vertically and/or the climbing aids (09) are disposed horizontally.

3. The device (01) as claimed in claim 1 or claim 2,
**characterized in that**
the climbing aids (09) are plate-shaped or wedge-shaped in configuration.

4. The device (01) as claimed in one of the preceding claims,
**characterized in that**
the through-passage openings (06) are a regular circle or are rectangular or irregular in configuration.

5. The device (01) as claimed in one of the preceding claims,
**characterized in that**
the size of the through-passage openings (06) can be adjusted by means of two carrier plates (05) with through-passage openings (06), wherein the carrier plates (05) are disposed in the passage device (02) in a manner such as to be displaceable relative to one another.

6. A device (01) for the voluntary self-sorting of live aquatic animals with at least one passage device (02), by means of which a water tank (28) can be divided into a through-passage facilitating region (03) and a through-passage obstructing region (04) and which has a plurality of through-passage openings (06) the size of which can be adapted to the aquatic animals to be sorted, wherein
• on the passage device (02), guide elements (07) are disposed towards the through-passage facilitating region (03) and retaining elements (08) are disposed towards the through-passage obstructing region (04),
• the guide elements (07) are angled in configuration with an internal angle (16) and an external angle (17),
• the external angles (17) of the guide elements (07) are directed towards the through-passage facilitating region (03),
• the width of the slot shape of the through-passage openings (06) is configured so as to be variable between guide elements (07) which are disposed adjacent to each other, and
• the retaining elements (08) are formed by the internal angles (16) of the guide elements (07),
**characterized in that**
the guide elements (07) are configured as angled bars (15) with an invariable internal angle (16) and an invariable external angle (17), and
**in that** the width of the slot-shaped through-passage openings (06) can be adjusted by the spacing of adjacent angled bars (15).

7. The device (01) as claimed in claim 6,
**characterized in that**
the angled bars (15) are additionally equipped with climbing aids (09), wherein these can be extended over a plurality of angled bars (15) disposed next to one another.

8. The device (01) as claimed in claim 7,
**characterized in that**
the angled bars (15) are disposed vertically and/or the climbing aids (09) are disposed horizontally.

9. The device (01) as claimed in claim 7 or claim 8,
**characterized in that**
towards the through-passage obstructing region (04), the angled bars (15) have flexible brush strips (19) on both sides of the slot-shaped through-passage openings (06) as additional retaining elements (08).

10. The device (01) as claimed in one of the preceding claims,
**characterized in that**
a flow element (26) is provided in the passage device (02) for the exchange of water between the through-passage facilitating region (03) and the through-passage obstructing region (04), wherein the flow element (26) comprises a passage barrier (27) so that the aquatic animals cannot pass through the flow element (26).

11. The device (01) as claimed in claim 10,
**characterized in that**
the flow element (26) is configured as a tube (31) and the passage element (27) is configured as a mesh screen (32).

12. The device (01) as claimed in one of the preceding claims,
**characterized in that**
the passage device (02) is modular in configuration in order to be adapted to different water tanks (28).

13. The device (01) as claimed in one of the preceding claims,
**characterized in that**
a plurality of passage devices (02) can be disposed spaced apart with respect to one another in a water tank (28), wherein the size of the through-passage openings (06) decreases in the direction of the through-passage obstructing regions (04).

14. The device (01) as claimed in one of the preceding claims,
**characterized in that**
the passage device (02) has a light colouration towards the through-passage facilitating region (03) and/or a dark colouration towards the through-passage obstructing region (04).

15. Application of the device (01) as claimed in one of the preceding claims to crustaceans as the live aquatic animals.

16. Application of the device (01) as claimed in claim 15 to shrimp as the crustaceans.

17. Application of the device (01) as claimed in one of the preceding claims to water tanks (28), which have different stimuli for attracting the live aquatic animals in the at least one through-passage obstructing region (04).

18. Application of the device (01) as claimed in claim 17,
**characterized in that**
the stimuli are formed by a food source, a light source and/or a colouration.

## Revendications

1. Dispositif (01), destiné à l'auto-triage volontaire d'espèces aquatiques vivantes, pourvu d'au moins un système de passage (02), par lequel un réservoir d'eau (28) est divisé en une zone (03) stimulant le passage et en une zone (04) inhibant le passage et qui comporte plusieurs ouvertures (06) de passage, adaptables par leurs dimensions aux espèces aquatiques qu'il s'agit de trier, sur le système de passage (02) vers la zone (03) stimulant le passage étant placés des éléments de guidage (07) et vers la zone (04) inhibant le passage étant placés des éléments de retenue (08), les ouvertures (06) de passage étant conçues de forme plane et étant placées dans une plaque de support (05) et présentant une hauteur qui est supérieure à la hauteur des espèces animales qu'il s'agit de trier,
**caractérisé en ce que**
les éléments de guidage (07) sont conçus sous la forme d'aides à la montée (09) et les éléments de retenue (08) sont conçues sous la forme de parois (11) périphériques, qui sont adaptées au contour des ouvertures (06) de passage.

2. Dispositif (01) selon la revendication 1,
**caractérisé en ce que**
le système de passage (02) est placé à la verticale et / ou les aides à la montée (09) sont placées à l'horizontale.

3. Dispositif (01) selon la revendication 1 ou 2,
**caractérisé en ce que**
les aides à la montée (09) sont conçues en forme de plaques ou en forme de coins.

4. Dispositif (01) selon l'une quelconque des revendications précédentes,
**caractérisé en ce que**
les ouvertures (06) de passage sont conçues de manière régulière de forme circulaire ou rectangulaire ou de manière irrégulière.

5. Dispositif (01) selon l'une quelconque des revendications précédentes,
**caractérisé en ce que**
les dimensions des ouvertures (06) de passage sont réglables au moyen de deux plaques de support (05) pourvues d'ouvertures (06) de passage, les plaques de support (05) étant placées dans le système de passage (02) en étant déplaçables l'une par rapport à l'autre.

6. Dispositif (01) destiné à l'auto-triage volontaire d'espèces aquatiques vivantes, pourvu d'au moins un système de passage (02), par lequel un réservoir d'eau (28) est divisé en une zone (03) stimulant le passage et en une zone (04) inhibant le passage et qui comporte plusieurs ouvertures (06) de passage, adaptables par leurs dimensions aux espèces aquatiques qu'il s'agit de trier
• sur le système de passage (02) vers la zone (03) stimulant le passage étant placés des éléments de guidage (07) et vers la zone (04) inhibant le passage étant placés des éléments de retenue (08),
• les éléments de guidage (07) étant conçus sous forme angulaire, avec un angle intérieur (16) et un angle extérieur (17),
• les angles extérieurs (17) des éléments de guidage (07) montrant vers la zone (03) stimulant le passage,
• les ouvertures (06) de passage variables dans leur largeur étant conçues en forme de fentes entre des éléments de guidage (07) placés côte à côte et
• les éléments de retenue (08) étant constitués par les angles intérieurs (16) des éléments de guidage (07),
**caractérisé en ce que**
les éléments de guidage (07) sont conçus sous la forme de cornières (15) avec un angle intérieur (16) invariable et un angle extérieur (17) invariable et
**en ce que** la largeur des ouvertures (06) de passage en forme de fentes est réglable par l'espacement de cornières (15) voisines.

7. Dispositif (01) selon la revendication 6,
**caractérisé en ce que**
les cornières (15) sont équipées additionnellement d'aides à la montée (09), celles-ci pouvant s'étendre sur plusieurs cornières (15) placées côte à côte.

8. Dispositif (01) selon la revendication 7,
**caractérisé en ce que**
les cornières (15) sont placées à la verticale et / ou les aides à la montée (09) sont placées à l'horizontale.

9. Dispositif (01) selon la revendication 7 ou 8,
**caractérisé en ce que**
les cornières (15) comportent vers la zone (04) inhibant le passage, de part et d'autre des ouvertures (06) de passage en forme de fentes des barrettes à brosses (19) souples, en tant qu'éléments de retenue (08) additionnels.

10. Dispositif (01) selon l'une quelconque des revendications précédentes,
**caractérisé en ce que**
dans le système de passage (02) est prévu un élément d'écoulement (26) pour l'échange d'eau entre la zone (03) stimulant le passage et la zone (04) inhibant le passage, l'élément d'écoulement (26) comprenant un barrage (27) du passage, de sorte que les espèces animales ne puissent pas passer l'élément d'écoulement (26).

11. Dispositif (01) selon la revendication 10,
**caractérisé en ce que**
l'élément d'écoulement (26) est conçu sous la forme d'un tube (31) et le barrage (27) du passage est conçu sous la forme d'une grille (32) à maillage.

12. Dispositif (01) selon l'une quelconque des revendications précédentes,
**caractérisé en ce que**
le système de passage (02) est conçu en version modulaire, pour s'adapter à différents réservoirs d'eau (28).

13. Dispositif (01) selon l'une quelconque des revendications précédentes,
**caractérisé en ce que** plusieurs systèmes de passage (02) peuvent se placer avec un espacement mutuel dans un réservoir d'eau (28), les ouvertures (06) de passage étant conçues avec des dimensions décroissantes en direction des zones (04) inhibant le passage.

14. Dispositif (01) selon l'une quelconque des revendications précédentes,
**caractérisé en ce que**
le système de passage (02) présente un coloration claire vers la zone (03) stimulant le passage et / ou une coloration sombre vers la zone (04) inhibant le passage.

15. Utilisation du dispositif (01) selon l'une quelconque des revendications précédentes pour des crustacés, en tant qu'espères aquatiques.

16. Utilisation du dispositif (01) selon la revendication 15 pour des crevettes, en tant que crustacés.

17. Utilisation du dispositif (01) selon l'une quelconque des revendications précédentes pour des réservoirs d'eau (28), qui présentent dans au moins une zone (04) inhibant le passage différents stimuli pour attirer les espèces aquatiques vivantes.

18. Utilisation du dispositif (01) selon la revendication 17,
**caractérisé en ce que** les stimuli sont constitués par une source de nourriture, une source lumineuse et / ou une coloration.
